(19) Europäisches Patentamt
European Patent Office
Office européen des brevets

(11) EP 2 252 672 B1

(12) **FASCICULE DE BREVET EUROPEEN**

(45) Date de publication et mention de la délivrance du brevet:
**20.02.2019 Bulletin 2019/08**

(21) Numéro de dépôt: **09722367.1**

(22) Date de dépôt: **02.03.2009**

(51) Int Cl.:
***C09K 9/02*** *(2006.01)*

(86) Numéro de dépôt international:
**PCT/FR2009/050339**

(87) Numéro de publication internationale:
**WO 2009/115721 (24.09.2009 Gazette 2009/39)**

# (54) COMPOSITION DE COLORANTS PHOTOCHROMIQUES DANS UN SOLVANT IONIQUE

ZUSAMMENSETZUNG MIT PHOTOCHROMEN FÄRBEMITTELN IN EINER IONISCHEN LÖSUNG

COMPOSITION COMPRISING PHOTOCHROMIC DYES IN AN IONIC SOLVENT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **05.03.2008 FR 0851442**

(43) Date de publication de la demande:
**24.11.2010 Bulletin 2010/47**

(73) Titulaire: **Essilor International**
**94220 Charenton-le-Pont (FR)**

(72) Inventeurs:
- **ARCHAMBEAU, Samuel**
  **F-94220 Charenton-le-Pont (FR)**
- **CANO, Jean-Paul**
  **F-94220 Charenton-le-Pont (FR)**
- **GALLEY, Corinne**
  **F-31078 Toulouse (FR)**
- **MALBOSC, François**
  **F-31078 Toulouse (FR)**

(74) Mandataire: **Cabinet Plasseraud**
**66, rue de la Chaussée d'Antin**
**75440 Paris Cedex 09 (FR)**

(56) Documents cités:
**FR-A1- 2 795 085**

- **S. ARZHANTSEV ET.AL.: "Solvation dynamics od coumarin 153 in several classes of ionic liquids: cation dependence of the ultrafast component" CHEMICAL PHYSICS LETTERS, vol. 381, 2003, pages 278-286, XP002500840**
- **F. PINA ET.AL.: "Photochromism of 7-(N,N-diethylamino)-4'-hydroxyflavylinium in a water-ion liquid biphasic system" CHEM. COMMUN., 2007, pages 1608-1610, XP002500841**
- **C. CHIAPPE, D. PIERACCINI: "Ionic liquids: solvent properties and organic reactivity" J. PHYS. ORG. CHEM., vol. 18, 2005, pages 275-297, XP002500842**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 252 672 B1

## Description

La présente invention concerne des compositions photochromiques, liquides à température ambiante, contenant des colorants photochromiques dissous dans une phase solvant à base d'un ou plusieurs liquide(s) ionique(s), ainsi que des dispositifs optiques renfermant de telles compositions liquides.

Le photochromisme est un phénomène physique bien connu observé pour certaines classes de composés. On peut trouver une discussion détaillée de ce phénomène dans
"Photochromism : Molecules and Systems", Studies in Organic Chemistry 40, edited by H. Durr and H. Bouas-Laurent, Elsevier, 1990.

Les dispositifs photochromes passifs, c'est-à-dire les dispositifs contenant des colorants photochromiques dont l'absorbance dépend uniquement de la présence ou absence de lumière UV, présentent typiquement une activation (coloration) rapide, mais plusieurs minutes, voire dizaines de minutes sont généralement nécessaires pour un retour vers l'état incolore.

Cette désactivation (décoloration) lente représente un problème pour l'utilisateur de verres photochromiques car il se trouve obligé de les enlever lorsqu'il passe rapidement d'un environnement lumineux vers un endroit sombre.

La vitesse de désactivation des colorants photochromiques dépend non seulement de leur structure chimique mais également, de façon non négligeable, de la matrice les contenant. On a ainsi pu montrer que la décoloration des colorants photochromiques était presque toujours plus rapide dans un milieu liquide que dans un milieu solide.

Le problème de la fabrication de composants optiques, et notamment de lentilles ophtalmiques, susceptible de contenir une phase liquide a été résolu récemment par la Demanderesse.

La demande de brevet français FR 2 872 589 divulgue ainsi un procédé de fabrication d'un composant optique transparent comportant un ensemble de cellules fermées, séparées les unes des autres, et juxtaposées parallèlement à une surface dudit composant optique. Chaque cellule peut être remplie avec un matériau optique approprié, liquide ou solide, de sorte que l'ensemble des cellules ainsi remplies confère au composant une caractéristique optique voulue telle que le photochromisme.

Dans une telle application, la matrice liquide accueillant les colorants photochromiques doit présenter les propriétés suivantes :

- non toxicité,
- capacité à dissoudre le colorant photochromique,
- absence de coloration,
- transparence, notamment au rayonnement UV,
- indice de réfraction au moins égal à 1,5 (limite de l'indice de réfraction des substrats organiques constitutifs des lentilles ophtalmiques)
- faible tension de vapeur,
- stabilité thermique et photochimique,
- inertie chimique vis-à-vis du colorant photochromique et vis-à-vis du matériau formant la paroi des cuves.

La Demanderesse, dans le cadre de ses recherches visant à mettre au point des composants optiques photochromes de plus en plus performants, a découvert qu'une certaine famille de composants, connus en tant que tels, pouvaient être utilisés avantageusement en tant que matrice liquide pour la solubilisation de colorants photochromes en vue de la fabrication de dispositifs optiques photochromiques tels que ceux décrits dans FR 2 872 589.

Ces composés, proposés ici pour la première fois pour la solubilisation de colorants photochromes, sont les liquides ioniques. Les liquides ioniques sont des liquides qui ne contiennent essentiellement que des ions. Au sens large, ce terme englobe tous les sels fondus, par exemple le chlorure de sodium à une température supérieure à 800 °C, mais aujourd'hui le terme « liquide ionique » est communément utilisé pour désigner des sels ayant un point de fusion inférieur à 100 °C.

Les liquides ioniques englobent notamment un groupe de composés ioniques liquides à température ambiante (20 °C) et qui sont appelés « liquides ioniques liquides à température ambiante » (en anglais : « room-temperature ionic liquids » (RTIL)).

Il est également connu d'utiliser des mélanges de liquides ioniques ayant un point de fusion inférieur à celui de chacun des liquides ioniques purs.

On connaît notamment l'intérêt d'utiliser des mélanges eutectiques de liquides ioniques. On entend par « mélange eutectique » un mélange de composés ayant un point de fusion inférieur au point de fusion de n'importe quel autre mélange de ces mêmes composés.

On a notamment décrit des mélanges eutectiques de liquides ioniques ayant des points de fusion spectaculairement inférieurs à ceux de leurs composants. Ce phénomène, appelé phénomène eutectique profond (*deep eutectic phenomenon*) a été décrit pour la première fois en 2003 pour un mélange de chlorure de choline et d'urée.

Il est également possible de réduire le point de fusion de liquides ioniques en les associant non pas entre eux, mais avec un solvant organique classique, miscible avec le sel (liquide ionique) dont on cherche à abaisser le point de fusion.

Dans la description ci-dessous, la matrice liquide à base de liquide(s) ionique(s) utilisée pour solubiliser un ou plusieurs colorants photochromes sera appelée systématiquement « solvant ionique ». Ce terme a ici une signification plus large que « liquide ionique » et englobe tout liquide ayant un point de fusion inférieur à 20 °C, et contenant au total au moins 50 % en poids, préférentiellement au moins 70 % en poids, d'un ou plusieurs « liquides ioniques » tels que définis ci-dessus (sels organiques ayant un point de fusion inférieur à 100 °C).

La présente invention a par conséquent pour objet une composition photochromique, liquide à 20 °C, comprenant (a) au moins un colorant photochromique, et (b) un solvant ionique.

L'invention a également pour objet l'utilisation d'une telle composition pour la fabrication d'un dispositif optique ainsi qu'un dispositif optique contenant une telle composition.

La présente invention a plus particulièrement pour objet une composition photochromique monophasique, liquide à 20 °C, comprenant

(a) au moins un colorant photochromique incolore à l'état inactivé choisi parmi les naphto[2,1-b]pyranes et les naphto[1,2-b]pyranes , et

(b) un solvant ionique comprenant au moins 50% en poids d'un ou plusieurs liquides ioniques qui sont des sels organiques de formule Q+A-dans laquelle

Q+ représente un cation organique choisi parmi les ions ammonium quaternaire ou ternaire, phosphonium quaternaire, sulfonium ternaire et guanidinium, et

A- représente n'importe quel anion, organique ou minéral, susceptible de former avec Q+ un sel ayant un point de fusion inférieur à 100 °C.

les dits liquides ioniques comportant dans leur partie cationique au moins un noyau aromatique ou hétéroaromatique à 5 ou 6 chainons comportant un ou deux atomes d'azote et leur anion A- étant un ion bis(perfluoroaklylsulfonyl) amidure.

Le document FR 2795 085 a trait à des matériaux photochromes à réponse très rapide comme la présente invention. Il concerne plus particulièrement un matériau photochrome comprenant une matrice hybride obtenue selon le procédé sol-gel et au moins un colorant photochromique dispersé dans cette matrice, par exemple de type naphtopyrane. Ce document ne divulgue absolument pas d'utiliser des solvants ioniques en tant que solvant pour ces colorants, encore moins les liquides ioniques tels que revendiqués dans la présente invention.

Comme expliqué ci-dessus, les liquides ioniques sont connus en tant que tels. Comme expliqué en introduction, tous les liquides ioniques ne sont pas liquides à température ambiante et il est nécessaire soit de sélectionner ceux qui ont un point de fusion inférieur à 20 °C, de préférence inférieur à 0 °C, et en particulier inférieur à -10 °C, soit de les associer à un autre liquide ionique ou bien à un solvant organique approprié en des proportions telles que le point de fusion du mélange homogène obtenu soit inférieur à 20 °C, de préférence inférieur à 0 °C et en particulier inférieur à -10 °C.

Autrement dit, le solvant ionique utilisé pour solubiliser un ou plusieurs colorants photochromes est de préférence choisi parmi

- (b)(i) les liquides ioniques liquides à température ambiante (RTIL),
- (b)(ii) les mélanges, liquides à température ambiante, de liquides ioniques.
- (b)(iii) les mélanges, liquides à température ambiante, d'au moins un liquide ionique et d'au moins un solvant organique miscible avec le(s) liquide(s) ionique(s).

Les composants (b)(i), (b)(ii) et (b)(iii) ci-dessus ont de préférence un point de fusion inférieur à 0 °C et en particulier un point de fusion inférieur à -10 °C. En effet, il est souhaitable que la matrice liquide (solvant ionique) ne se solidifie pas à des températures relativement basses que l'utilisateur du dispositif optique de la présente invention est susceptible de rencontrer en hiver et/ou en altitude.

Dans un mode de réalisation de la présente invention, le mélange de liquides ioniques (b)(ii) est un mélange eutectique d'au moins deux liquides ioniques, c'est-à-dire un mélange ayant un point de fusion inférieur à n'importe quel autre mélange de ces liquides ioniques.

On connaît actuellement quelques centaines de liquides ioniques et la synthèse et caractérisation de nouveaux membres de cette famille de composés est en cours. Il est par conséquent impossible de donner ici une liste exhaustive de composés susceptibles de répondre aux critères de fusibilité et de miscibilité ci-dessus.

Les liquides ioniques utilisés dans la présente invention sont choisis parmi les sels organiques de formule $Q^+A^-$ dans laquelle

$Q^+$ représente un cation organique choisi parmi les ions ammonium quaternaire et ternaire, phosphonium quaternaire, sulfonium ternaire et guanidinium, et

A- représente n'importe quel anion, organique ou minéral, susceptible de former avec $Q^+$ un sel ayant un point de fusion inférieur à 100 °C.

De façon analogue, on peut définir les liquides ioniques liquides à température ambiante (*room-temperature ionic liquids,* RTIL) comme étant de préférence choisis parmi les sels de formule $Q^+A^-$ dans laquelle

$Q^+$ représente un cation choisi parmi les ions ammonium quaternaire et ternaire, phosphonium quaternaire, sulfonium ternaire et guanidinium, et

A- représente n'importe quel anion, organique ou minéral, susceptible de former avec $Q^+$ un sel ayant un point de fusion inférieur à 20 °C.

Les liquides ioniques utilisés dans la présente invention comportent, dans leur partie cationique, au moins un noyau aromatique, tel que phényle ou naphtyle, ou hétéroaromatique à 5 ou 6 chaînons comportant un ou deux atomes d'azote

Les liquides ioniques sont de préférence choisis parmi le bis(trifluorométhylsulfonyle)amidure de butyl-1-méthyl-3-imidazolium, le bis(trifluorométhylsulfonyl)amidure de butyl-1-diméthyl-2,3-imidazolium, le bis(trifluorométhylsulfonyl)amidure de éthyl-1-méthyl-3-imidazolium, le bis(trifluorométhylsulfonyl)amidure de hexyl-1-méthyl-3-imidazolium, le bis(trifluorométhylsulfonyl)amidure de octyl-1-méthyl-3-imidazolium, le bis(trifluorométhylsulfonyl)amidure de diméthyl-2,3-propyl-1-imidazolium, le bis(trifluorométhylsulfonyl)amidure de phényléthyl-1-méthyl-3-imidazolium, le bis-(trifluorométhylsulfonyl)amidure de phényléthyl-diméthyl-benzylammonium, le bis-(trifluorométhylsulfonyl)amidure d'éthyl-diméthyl-benzyl-ammonium,

Parmi ces liquides ioniques ceux inclus dans la liste suivante sont des RTIL tels que définis précédemment : L'acétate de butyl-1-méthyl-3-imidazolium, le bis(trifluorométhylsulfonyle)amidure de butyl-1-méthyl-3-imidazolium, le bis(trifluorométhylsulfonyl)amidure d'éthyl-1-méthyl-3-imidazolium, le bis(trifluorométhylsulfonyl)amidure d'hexyl-1-méthyl-3-imidazolium, le bis(trifluorométhylsulfonyl)amidure de méthyl-1-propyl-1-piperidinium, le bis(trifluorométhylsulfonyl)amidure de diméthyl-2,3-propyl-1-imidazolium.

On peut utiliser pour la présente invention en principe n'importe quel colorant photochromique stable, soluble dans les solvants ioniques décrits ci-dessus. Pour des raisons évidentes, on choisira de préférence des colorants photochromiques présentant une différence de transmission importante entre l'état activé et l'état inactivé. Les colorants photochromiques sont avantageusement incolores à l'état non activé.

Le colorant photochromique utilisé dans la présente invention est choisi parmi les naphto[2,1-b]pyranes et les naphto[1,2-b]pyranes.

Le solvant organique miscible avec le ou les liquide(s) ionique(s) est de préférence choisi parmi le 4-méthoxyphénylacétate d'éthyle (EMPA), le carbonate de propylène, le diphénylméthane, le toluène, la tétrabutylurée, la y-butyrolactone, l'acétophénone, ainsi que les solvants à motif phtalate.

La composition photochromique liquide de la présente invention a de préférence une viscosité permettant de l'introduire dans les « cellules » ou « cuves » très fines de dispositifs optiques tels que ceux décrits dans la demande FR 2 872 589. Cette introduction se fait de préférence par des procédés de dépôt par jet de matière de compositions relativement peu visqueuses, par exemple à l'aide de dispositifs d'impression par jet d'encre. Les compositions photochromiques de la présente invention ont par conséquent de préférence une viscosité Brookfield, mesurée à 20 °C, inférieure à 1000 centipoises, en particulier comprise entre 9 et 100 centipoises.

La composition photochromique de la présente invention est bien entendu de préférence essentiellement exempte d'eau et monophasique.

Comme expliqué en introduction, les solvants ioniques présentent l'avantage, entre autres, de permettre l'obtention de solutions de colorants photochromes relativement plus concentrées que celles de l'art antérieur. La dissolution des colorants photochromes se fait de préférence à chaud, par exemple à des températures comprises entre 80 et 150 °C, puis on laisse la composition refroidir à température ambiante avant d'en éliminer les résidus solides. Il a été ainsi possible d'atteindre des concentrations en colorant photochromes de 0,3 mol/L.

La concentration du colorant photochromique dans les compositions photochromiques à base de solvants ioniques de la présente invention est par conséquent de préférence comprise entre 0,01 et 0,4 mole/L, en particulier entre 0,05 et 0,3 mole/L.

Les compositions photochromiques de la présente invention peuvent contenir en outre toute sorte d'additifs utiles dans l'application envisagée à condition que ceux-ci n'altèrent pas les propriétés intrinsèques avantageuses des compositions de la présente invention. On peut citer à titre d'exemples de tels additifs, les agents stabilisants, les agents tensioactifs, les colorants autres que les colorants photochromes

La présente invention a pour objet non seulement les compositions photochromiques à base de solvant ionique en tant que telles, mais également leur utilisation pour la fabrication de dispositifs ou de composants optiques, tels que des lentilles ophtalmiques, correctrices ou non correctrices, ainsi que d'autres éléments conçus pour corriger, protéger ou augmenter la vision, qui englobent, sans s'y limiter, les lentilles de contact, les lentilles intraoculaires, des loupes, des lentilles de protection. Les dispositifs ou composants optiques englobent également des vitres du bâtiment ou de véhicules de transport, des filtres, ou des commutateurs optiques.

Le dispositif optique est de préférence une lentille ophtalmique.

Le dispositif optique de la présente invention comprend de préférence un ensemble de cellules juxtaposées parallèlement à une surface du dispositif optique, chaque cellule étant hermétiquement fermée et contenant ladite composition photochromique à base de solvant ionique. L'ensemble de cellules, juxtaposées parallèlement à une surface dudit dispositif optique et contenant ladite composition photochromique, est de préférence formé dans une couche transparente polymérique formée sur un support rigide transparent. Les caractéristiques techniques et différents modes de réalisation de tels dispositifs optiques, ainsi qu'un procédé de préparation de tels dispositifs sont décrits en détail dans la demande FR 2 872 589 de la demanderesse.

Exemple 1

On prépare une solution de chacun des colorants photochromiques suivants

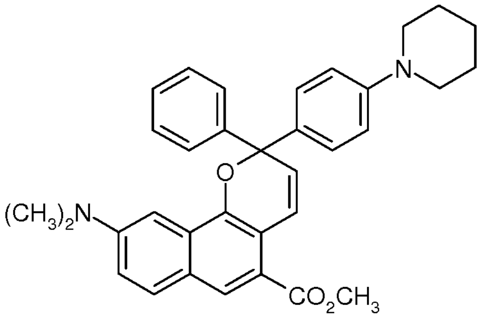

Colorant 1

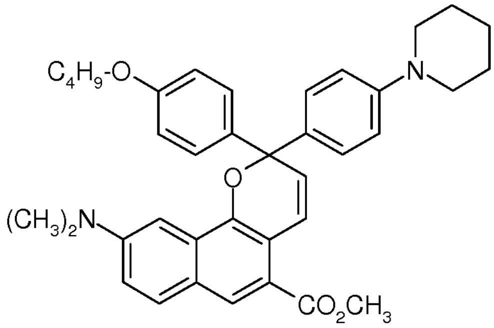

Colorant 2

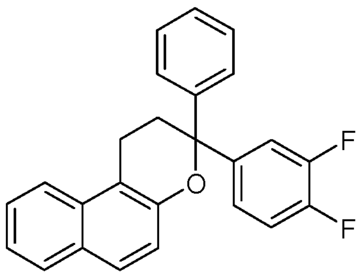

Colorant 3

d'une part dans du 4-méthoxyphénylacétate d'éthyle (EMPA), un solvant organique utilisé classiquement pour la solubilisation de colorants photochromiques, et, d'autre part, dans un « solvant ionique » formé par un mélange des deux liquides ioniques suivants :

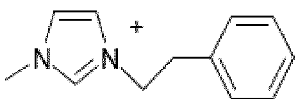

$(CF_3SO_2)_2N^-$

bis-(trifluorosulfonyl)-amidure de phényléthyl-1-méthyl-3-imidazolium

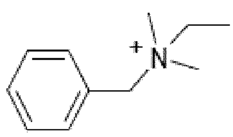

$(CF_3SO_2)_2N^-$

bis-(trifluorosulfonyl)-amidure de éthyl-diméthyl-benzylammonium

Le tableau 1 ci-après rassemble, pour chacune des solutions ainsi préparées :

C : la concentration de la solution préparée (en mol/L)
$\lambda_{max}$ : la longueur d'onde d'absorption maximale du colorant dissous
$T_0$ : la transmission de la solution avant irradiation
$T_{5min}$ : la transmission après 5 minutes d'irradiation UV
$\Delta T = T_0 - T_{5min}$ : la différence entre la transmission à l'état décoloré et à l'état activé (coloré)
T3/4 : le temps nécessaire pour revenir, après arrêt de l'irradiation UV, au quart de l'amplitude de coloration, exprimée en densité optique

Tableau 1

| colorant | solvant | C (mol/L) | $\lambda_{max}$ (nm) | $T_0$(%) | $T_{5min}$(%) | $\Delta T$ | $T_{3/4}$ (sec) |
|---|---|---|---|---|---|---|---|
| Colorant 1 | EMPA | 0,083 | 425 | 93,62 | 91,51 | 2,11 | 36,5 |
| | Solvant ionique | | 452 | 92,90 | 91,71 | 1,19 | **12** |
| Colorant 2 | EMPA | 0,032 | 587 | 89,54 | 45,04 | 44,5 | 25,2 |
| | Solvant ionique | | 600 | 92,76 | 78,93 | 13,83 | **10,6** |
| Colorant 3 | EMPA | 0,026 | 587 | 88,45 | 64,26 | 24,19 | 9,7 |
| | Solvant ionique | | 604 | 94,88 | 82,37 | 12,51 | **6,1** |

Le tableau 2 ci-après présente les paramètres cinétiques des colorants 2 et 3 (le colorant 1 ne présentant pas un $\Delta T$ suffisamment important pour le calcul). Les paramètres de décoloration ont été analysés en utilisant une fonction bi-exponentielle standard :

$$A(t)=A_1 e^{-k1t}+A_2 T\ e^{-k2t}$$

où

A(t) = densité optique,
$A_1$ et $A_2$ = contributions respectives à la densité optique initiale des composantes rapides et lentes,
k1 et k2 = constantes de vitesse de décoloration des composantes rapides et lentes (en $secondes^{-1}$).

Tableau 2

| Colorant | solvant | k1($s^{-1}$) | k2($s^{-1}$) | $A_1$ | $A_2$ |
|---|---|---|---|---|---|
| Colorant 2 | EMPA | 3,374 | 0 | 0,355 | 0,049 |
| | Solvant Ionique | 7,95 | 0 | 0,103 | 0,033 |
| Colorant 3 | EMPA | 8,59 | 0 | 0,211 | 0,054 |
| | Solvant Ionique | 13,99 | 0,02 | 0,116 | 0,024 |

Ces résultats montrent qu'à concentration égale, la différence de transmission entre l'état inactivé (incolore) et l'état activé (coloré) est dans tous les cas deux à trois fois moins importante dans le solvant ionique (mélange de deux liquides ioniques). Cet inconvénient peut toutefois être largement compensé en augmentant la concentration des colorants photochromiques dans le mélange de liquides ioniques.

Par ailleurs, on constate que le temps nécessaire pour revenir, après arrêt de l'irradiation, au quart de la densité optique est considérablement réduit dans un solvant ionique. En effet, le tableau 2 montre que la constante de vitesse principale (k1) est toujours plus importante dans le cas du liquide ionique.

On observe également un effet secondaire surprenant appelé « effet bathochromique »: ainsi dans le cas d'un solvant ionique comparé à un solvant organique traditionnel on constate un déplacement du maximum d'absorption

($\lambda_{max}$(nm)) vers les grandes longueurs d'ondes.

Exemple 2

Dans cet exemple, on dissout chacun de deux colorants photochromiques, à savoir le Reversacol® Midnight Grey (colorant 4) et le colorant 5 de formule

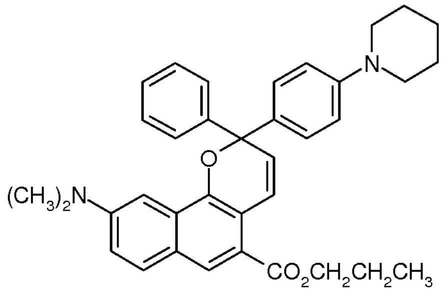

Colorant 5

dans une série de liquides ioniques et, à titre de comparaison, dans l'EMPA : Le tableau 3 ci-après rassemble les différences de transmission ($\Delta$T) et les temps de désactivation ($T_{3/4}$) après arrêt de l'irradiation pour chacune des solutions ainsi préparées :

Tableau 3

| Colorant | Solvant ionique ou EMPA | C | $\Delta$T | $T_{3/4}$ |
|---|---|---|---|---|
| Colorant 4 | BTSA de 1-éthyl-3-méthylimidazolium | 0,0335 (mol/L) | 17,87 | 5,4 |
| | BTSA de 1,2-diméthyl-3-butylimidazolium | 0,0335 (mol/L) | 23,66 | 6,7 |
| | BTSA de 1-butyl-3-méthylimidazolium | 0,0248 (mol/L) | 23,88 | 8,0 |
| | Hexafluorophosphate de 1-butyl-3-méthylimidazolium (*) | 0,0336 (mol/L) | 8,8 | 6,9 |
| | Dicyanamide de 1-butyl-3-méthylimidazolium (*) | 0,0211 (mol/L) | 21,47 | 17,3 |
| | BTSA de N-butyl-N-méthylpyrrolidinium (*) | 0,028 (mol/L) | 30,76 | 13,4 |
| | BTSA de N-butyl-N-méthylpyrrolidinium (*) | 0,325 (mol/L) | 52,33 | 13,9 |
| | BTSA de N-triméthyl-N-butylammonium (*) | 0,0297 (mol/L) | 33,08 | 16,9 |
| | EMPA (comparatif) | **0,03 (mol/L)** | **55,38** | **25,4** |
| Colorant 5 | BTSA de 1-éthyl-3-méthylimidazolium | 3,0 % en poids | 30,93 | 6,9 |
| | BTSA de N-butyl-N-méthylpyrrolidinium (*) | 3,0 % en poids | 46,70 | 13,8 |
| | Dicyanamide de 1-butyl-3-méthylimidazolium | 2,98 % en poids | 36,98 | 15,4 |
| | BTSA de N-triméthyl-N-butylammonium (*) | 2,98 % en poids | 48,67 | 17,5 |
| | BTSA de N-butyl-N-méthylpyrrolidinium (*) | 5,84 % en poids | 53,81 | 15,2 |
| | EMPA (comparatif) | **3,0 % en poids** | **65,17** | **26** |
| BTSA = Bis-(trifluorosulfonyl)amidure<br>EMPA = 4-méthoxyphénylacétate d'éthyle (solvant organique comparatif)<br>(*) Hors invention | | | | |

On constate que, comme pour les solutions de l'exemple 1, le temps de décoloration ($T_{3/4}$) du colorant photochromique dissous dans un solvant ionique est systématiquement inférieur à celui constaté dans un solvant classique tel que l'EMPA.

Exemple 3

Cet exemple illustre l'influence du rapport solvant ionique/solvant organique sur la cinétique de décoloration de colorants photochromiques.

On dissout 0,03 mol/L du colorant 5 de l'Exemple 2 dans différents mélanges de solvants ayant une teneur en liquide ionique croissante et l'on détermine le temps de décoloration ($T_{3/4}$) après arrêt de l'irradiation UV. Le liquide ionique est celui utilisé dans l'exemple 1, c'est-à-dire un mélange de bis-(trifluorosulfonyl)amidure de phényléthyl-1-méthyl-3-imidazolium et de bis-(trifluorosulfonyl)amidure d'éthyl-diméthyl-benzylammonium. Les résultats sont présentés dans le tableau 4 ci-dessous.

Tableau 4 :

| Cinétique de décoloration d'un colorant photochromique en fonction de la teneur en liquide ionique du solvant | |
|---|---|
| Rapport 4-méthoxyphénylacétate d'éthyle/liquide ionique | $T_{3/4}$ |
| 100 / 0 | 54 secondes |
| 75 / 25 | 54 secondes |
| 50 / 50 | 54 secondes |
| 75 / 25 | 30 secondes |
| 0 / 100 | 18 secondes |

Ces résultats montrent que, pour le colorant 5 et pour cette combinaison de solvant organique (EMPA) et de liquide ionique, la vitesse de décoloration du colorant ne change pas pour des teneurs en liquide ionique inférieures ou égales à 50 %. Au delà de cette valeur, le temps de décoloration est sensiblement raccourci et ceci d'autant plus que la teneur en liquide ionique augmente.

Tableau 2

| Colorant | solvant | k1($s^{-1}$) | k2($s^{-1}$) | $A_1$ | $A_2$ |
|---|---|---|---|---|---|
| Colorant 2 | EMPA | 3,374 | 0 | 0,355 | 0,049 |
| | Solvant Ionique | 7,95 | 0 | 0,103 | 0,033 |
| Colorant 3 | EMPA | 8,59 | 0 | 0,211 | 0,054 |
| | Solvant Ionique | 13,99 | 0,02 | 0,116 | 0,024 |

Ces résultats montrent qu'à concentration égale, la différence de transmission entre l'état inactivé (incolore) et l'état activé (coloré) est dans tous les cas deux à trois fois moins importante dans le solvant ionique (mélange de deux liquides ioniques). Cet inconvénient peut toutefois être largement compensé en augmentant la concentration des colorants photochromiques dans le mélange de liquides ioniques.

Par ailleurs, on constate que le temps nécessaire pour revenir, après arrêt de l'irradiation, au quart de la densité optique est considérablement réduit dans un solvant ionique. En effet, le tableau 2 montre que la constante de vitesse principale (k1) est toujours plus importante dans le cas du liquide ionique.

On observe également un effet secondaire surprenant appelé « effet bathochromique »: ainsi dans le cas d'un solvant ionique comparé à un solvant organique traditionnel on constate un déplacement du maximum d'absorption ($\lambda_{max}$(nm)) vers les grandes longueurs d'ondes.

Exemple 2

Dans cet exemple, on dissout chacun de deux colorants photochromiques, à savoir le Reversacol® Midnight Grey (colorant 4) et le colorant 5 de formule

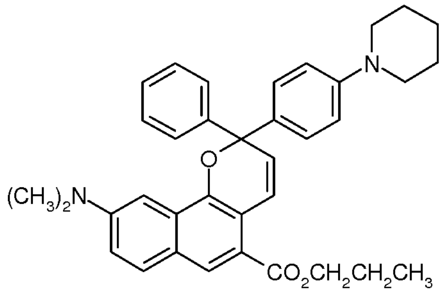

Colorant 5

dans une série de liquides ioniques et, à titre de comparaison, dans l'EMPA : Le tableau 3 ci-après rassemble les différences de transmission (ΔT) et les temps de désactivation ($T_{3/4}$) après arrêt de l'irradiation pour chacune des solutions ainsi préparées :

Tableau 3

| **Colorant** | **Solvant ionique ou EMPA** | **C** | **ΔT** | **$T_{3/4}$** |
|---|---|---|---|---|
| Colorant 4 | BTSA de 1-éthyl-3-méthylimidazolium | 0,0335 (mol/L) | 17,87 | 5,4 |
| | BTSA de 1,2-diméthyl-3-butylimidazolium | 0,0335 (mol/L) | 23,66 | 6,7 |
| | BTSA de 1-butyl-3-méthylimidazolium | 0,0248 (mol/L) | 23,88 | 8,0 |
| | Hexafluorophosphate de 1-butyl-3-méthylimidazolium (*) | 0,0336 (mol/L) | 8,8 | 6,9 |
| | Dicyanamide de 1-butyl-3-méthylimidazolium (*) | 0,0211 (mol/L) | 21,47 | 17,3 |
| | BTSA de N-butyl-N-méthylpyrrolidinium (*) | 0,028 (mol/L) | 30,76 | 13,4 |
| | BTSA de N-butyl-N-méthylpyrrolidinium (*) | 0,325 (mol/L) | 52,33 | 13,9 |
| | BTSA de N-triméthyl-N-butylammonium (*) | 0,0297 (mol/L) | 33,08 | 16,9 |
| | EMPA (comparatif) | **0,03 (mol/L)** | **55,38** | **25,4** |
| Colorant 5 | BTSA de 1-éthyl-3-méthylimidazolium | 3,0 % en poids | 30,93 | 6,9 |
| | BTSA de N-butyl-N-méthylpyrrolidinium (*) | 3,0 % en poids | 46,70 | 13,8 |
| | Dicyanamide de 1-butyl-3-méthylimidazolium | 2,98 % en poids | 36,98 | 15,4 |
| | BTSA de N-triméthyl-N-butylammonium (*) | 2,98 % en poids | 48,67 | 17,5 |
| | BTSA de N-butyl-N-méthylpyrrolidinium (*) | 5,84 % en poids | 53,81 | 15,2 |
| | EMPA (comparatif) | **3,0 % en poids** | **65,17** | **26** |
| BTSA = Bis-(trifluorosulfonyl)amidure<br>EMPA = 4-méthoxyphénylacétate d'éthyle (solvant organique comparatif)<br>(*) Hors invention | | | | |

On constate que, comme pour les solutions de l'exemple 1, le temps de décoloration ($T_{3/4}$) du colorant photochromique dissous dans un solvant ionique est systématiquement inférieur à celui constaté dans un solvant classique tel que l'EMPA.

Exemple 3

Cet exemple illustre l'influence du rapport solvant ionique/solvant organique sur la cinétique de décoloration de colorants photochromiques.

On dissout 0,03 mol/L du colorant 5 de l'Exemple 2 dans différents mélanges de solvants ayant une teneur en liquide ionique croissante et l'on détermine le temps de décoloration ($T_{3/4}$) après arrêt de l'irradiation UV. Le liquide ionique est celui utilisé dans l'exemple 1, c'est-à-dire un mélange de bis-(trifluorosulfonyl)amidure de phényléthyl-1-méthyl-3-imidazolium et de bis-(trifluorosulfonyl)amidure d'éthyl-diméthyl-benzylammonium. Les résultats sont présentés dans le tableau 4 ci-dessous.

Tableau 4 :

| Cinétique de décoloration d'un colorant photochromique en fonction de la teneur en liquide ionique du solvant | |
|---|---|
| Rapport 4-méthoxyphénylacétate d'éthyle/liquide ionique | $T_{3/4}$ |
| 100 / 0 | 54 secondes |
| 75 / 25 | 54 secondes |
| 50 / 50 | 54 secondes |
| 75 / 25 | 30 secondes |
| 0 / 100 | 18 secondes |

Ces résultats montrent que, pour le colorant 5 et pour cette combinaison de solvant organique (EMPA) et de liquide ionique, la vitesse de décoloration du colorant ne change pas pour des teneurs en liquide ionique inférieures ou égales à 50 %. Au delà de cette valeur, le temps de décoloration est sensiblement raccourci et ceci d'autant plus que la teneur en liquide ionique augmente.

## Revendications

**1.** Composition photochromique monophasique, liquide à 20 °C, comprenant

(a) au moins un colorant photochromique incolore à l'état inactivé choisi parmi les naphto[2,1-b]pyranes et les naphto[1,2-b]pyranes , et
(b) un solvant ionique comprenant au moins 50% en poids d'un ou plusieurs liquides ioniques qui sont des sels organiques de formule $Q^+A^-$ dans laquelle

$Q^+$ représente un cation organique choisi parmi les ions ammonium quaternaire ou ternaire, phosphonium quaternaire, sulfonium ternaire et guanidinium, et
$A^-$ représente n'importe quel anion, organique ou minéral, susceptible de former avec $Q^+$ un sel ayant un point de fusion inférieur à 100 °C.
les dits liquides ioniques comportant dans leur partie cationique au moins un noyau aromatique ou hétéroaromatique à 5 ou 6 chainons comportant un ou deux atomes d'azote et leur anion $A^-$ étant un ion bis(perfluoroaklylsulfonyl) amidure.

**2.** Composition photochromique selon la revendication 1, **caractérisée par le fait que** le solvant ionique est choisi parmi

- (b)(i) les liquides ioniques liquides à température ambiante (RTIL),
- (b)(ii) les mélanges, liquides à température ambiante, de liquides ioniques.
- (b)(iii) les mélanges, liquides à température ambiante, d'au moins un liquide ionique et d'au moins un solvant organique miscible avec le(s) liquide(s) ionique(s).

**3.** Composition photochromique selon l'une quelconque des revendications précédentes, **caractérisée par le fait que** les liquides ioniques liquides à température ambiante (RTIL) sont choisis parmi les sels de formule $Q^+A^-$ dans laquelle $Q^+$ représente un cation choisi parmi les ions ammonium ternaire et quaternaire, phosphonium quaternaire, sulfonium ternaire et guanidinium, et
$A^-$ représente n'importe quel anion, organique ou minéral, susceptible de former avec $Q^+$ un sel ayant un point de fusion inférieur à 20 °C.

**4.** Composition selon l'une quelconque des revendications précédentes, **caractérisée par le fait que** les liquides ioniques sont choisis parmi le bis(trifluorométhylsulfonyle)amidure de butyl-1-méthyl-3-imidazolium, le bis(trifluorométhylsulfonyl)amidure de butyl-1-diméthyl-2,3-imidazolium, , le bis(trifluorométhylsulfonyl)amidure de éthyl-1-méthyl-3-imidazolium, le bis(trifluorométhylsulfonyl)amidure de hexyl-1-méthyl-3-imidazolium, le bis(trifluorométhylsulfonyl)amidure de octyl-1-méthyl-3-imidazolium, le bis(trifluorométhylsulfonyl)amidure de diméthyl-2,3-propyl-1-imidazolium, , le bis(trifluorométhylsulfonyl)amidure de phényléthyl-1-méthyl-3-imidazolium, le bis-(trifluorométhylsulfonyl)amidure de phényléthyl-diméthyl-benzylammonium, le bis-(trifluorométhylsulfonyl)amidure d'éthyl-diméthyl-benzyl)ammonium.

5. Composition selon l'une quelconque des revendications 2 à 4, **caractérisée par le fait que** le solvant organique miscible avec le ou les liquide(s) ionique(s) est choisi parmi le 4-méthoxyphénylacétate d'éthyle (EMPA), le carbonate de propylène, le diphénylméthane, le toluène, la tétrabutylurée, la $\gamma$-butyrolactone, l'acétophénone, ainsi que les solvants à motif phtalate.

6. Composition selon l'une quelconque des revendications précédentes, **caractérisée par le fait qu'**elle présente une viscosité, à 20 °C, inférieure à 1 Pa.s (1000 centipoises), de préférence comprise entre 0,009 et 0,1 Pa.s (9 et 100 centipoises).

7. Composition selon l'une quelconque des revendications précédentes, **caractérisée par le fait que** la concentration du colorant photochromique est comprise entre 0,01 et 0,4 mole/L, de préférence entre 0,05 et 0,3 mole/L.

8. Dispositif optique contenant une composition photochromique selon l'une quelconque des revendications précédentes.

9. Dispositif optique selon la revendication 8, **caractérisé par le fait qu'**il comprend un ensemble de cellules juxtaposées parallèlement à une surface du dispositif optique, chaque cellule étant hermétiquement fermée et contenant ladite composition photochromique selon l'une quelconque des revendications 1 - 7.

10. Dispositif optique selon les revendications 8 ou 9, **caractérisé par le fait que** l'ensemble de cellules, juxtaposées parallèlement à une surface dudit dispositif optique et contenant ladite composition photochromique, est formé dans une couche transparente polymérique formée sur un support rigide transparent.

**Patentansprüche**

1. Einphasige photochrome Zusammensetzung, die bei 20 °C flüssig ist und Folgendes umfasst:

   (a) mindestens einen in nichtaktiviertem Zustand farblosen photochromen Farbstoff, der aus Naphtho-[2,1-b]pyranen und Naphtho[1,2-b]pyranen ausgewählt ist, und
   (b) ein ionisches Lösungsmittel, das mindestens 50 Gew.-% einer oder mehrerer ionischen Flüssigkeiten umfasst, bei denen es sich um organische Salze der Formel $Q^+A^-$, in der

   $Q^+$ für ein organisches Kation, das aus quaternären oder ternären Ammoniumionen, quaternären Phosphoniumionen, ternären Sulfoniumionen und Guanidiniumionen ausgewählt ist, steht und
   $A^-$ für ein organisches oder anorganisches Anion, das mit $Q^+$ ein Salz mit einem Schmelzpunkt von weniger als 100 °C bilden kann, steht,
   handelt, wobei die ionischen Flüssigkeiten in ihrem kationischen Teil mindestens einen aromatischen oder 5- oder 6-gliedrigen heteroaromatischen Kern mit einem oder zwei Stickstoffatomen umfassen und wobei es sich bei deren Anion $A^-$ um ein Bis-(perfluoralkylsulfonyl)amid-Ion handelt.

2. Photochrome Zusammensetzung nach Anspruch 1, **dadurch gekennzeichnet, dass** das ionische Lösungsmittel aus

   - (b)(i) bei Umgebungstemperatur flüssigen ionischen Flüssigkeiten (RTIL),
   - (b)(ii) bei Umgebungstemperatur flüssigen Mischungen von ionischen Flüssigkeiten,
   - (b)(iii) bei Umgebungstemperatur flüssigen Mischungen von mindestens einer ionischen Flüssigkeit und mindestens einem organischen Lösungsmittel, das mit der ionischen Flüssigkeit bzw. den ionischen Flüssigkeiten mischbar ist,

   ausgewählt ist.

3. Photochrome Zusammensetzung nach einem der vorhergehenden Ansprüche, **dadurch gekennzeichnet, dass** die bei Umgebungstemperatur flüssigen ionischen Flüssigkeiten (RTIL) aus den Salzen der Formel $Q^+A^-$, in der $Q^+$ für ein Kation, das aus ternären und quaternären Ammoniumionen, quaternären Phosphoniumionen, ternären

Sulfoniumionen und Guanidiniumionen ausgewählt ist, steht und
$A^-$ für ein organisches oder anorganisches Anion, das mit $Q^+$ ein Salz mit einem Schmelzpunkt von weniger als 20 °C bilden kann, steht,
ausgewählt sind.

**4.** Zusammensetzung nach einem der vorhergehenden Ansprüche, **dadurch gekennzeichnet, dass** die ionischen Flüssigkeiten aus 1-Butyl-3-methyl-imidazoliumbis(trifluormethylsulfonyl)amid, 1-Butyl-2,3-dimethylimidazolium-bis(trifluormethylsulfonyl)amid, 1-Ethyl-3-methylimidazoliumbis(trifluormethylsulfonyl)amid, 1-Hexyl-3-methyl-imidazoliumbis(trifluormethylsulfonyl)amid, 1-Octyl-3-methylimidazoliumbis(trifluormethylsulfonyl)amid, 2,3-Dimethyl-1-propylimidazolium-bis(trifluormethylsulfonyl)amid, 1-Phenylethyl-3-methylimidazoliumbis (trifluormethylsulfonyl)amid, Phenylethyl-dimethyl-benzylammoniumbis(trifluormethylsulfonyl)amid und Ethyl-dimethyl-benzylammoniumbis (trifluormethylsulfonyl)amid, ausgewählt sind.

**5.** Zusammensetzung nach einem der Ansprüche 2 bis 4, **dadurch gekennzeichnet, dass** das organische Lösungsmittel, das mit der ionischen Flüssigkeit bzw. den ionischen Flüssigkeiten mischbar ist, aus Ethyl-4-methoxyphenylacetat (EMPA), Propylencarbonat, Diphenylmethan, Toluol, Tetrabutylharnstoff, γ-butyrolacton, Acetophenon sowie Lösungsmitteln mit einer Phthalat-Einheit ausgewählt ist.

**6.** Zusammensetzung nach einem der vorhergehenden Ansprüche, **dadurch gekennzeichnet, dass** sie eine Viskosität bei 20 °C von weniger als 1 Pa.s (1000 Centipoise), vorzugsweise zwischen 0,009 und 0,1 Pa.s (9 und 100 Centipoise) aufweist.

**7.** Zusammensetzung nach einem der vorhergehenden Ansprüche, **dadurch gekennzeichnet, dass** die Konzentration des photochromen Farbstoffs zwischen 0,01 und 0,4 mol/l, vorzugsweise zwischen 0,05 und 0,3 mol/l, liegt.

**8.** Optische Vorrichtung, enthaltend eine photochrome Zusammensetzung nach einem der vorhergehenden Ansprüche.

**9.** Optische Vorrichtung nach Anspruch 8, **dadurch gekennzeichnet, dass** sie eine Anordnung von parallel zu einer Oberfläche der optischen Vorrichtung nebeneinander angeordneten Zellen umfasst, wobei jede Zelle luftdicht verschlossen ist und die photochrome Zusammensetzung nach einem der Ansprüche 1-7 enthält.

**10.** Optische Vorrichtung nach den Ansprüchen 8 oder 9, **dadurch gekennzeichnet, dass** die Anordnung von parallel zu einer Oberfläche der optischen Vorrichtung nebeneinander angeordneten und die photochrome Zusammensetzung enthaltenden Zellen in einer auf einem transparenten starren Träger ausgebildeten transparenten Polymerschicht ausgebildet ist.

## Claims

**1.** Single-phase photochromic composition which is liquid at 20°C and which comprises:

(a) at least one photochromic dye which is colorless in the inactivated state chosen from naphtho[2,1-b]pyrans and naphtho[1,2-b]pyrans, and
(b) an ionic solvent comprising at least 50% by weight of one or more ionic liquids which are organic salts of formula $Q^+A^-$ in which

$Q^+$ represents an organic cation chosen from quaternary or ternary ammonium, quaternary phosphonium, ternary sulfonium and guanidinium ions, and
$A^-$ represents any organic or inorganic anion capable of forming, with $Q^+$, a salt having a melting point of less than 100°C, said ionic liquids comprising, in their cationic part, at least one aromatic nucleus or 5- or 6-membered heteroaromatic nucleus comprising one or two nitrogen atoms and their $A^-$ anion being a bis(perfluoroalkylsulfonyl)amide ion.

**2.** Photochromic composition according to Claim 1, **characterized in that** the ionic solvent is chosen from

- (b)(i) room-temperature ionic liquids (RTIL),
- (b)(ii) mixtures, liquid at ambient temperature, of ionic liquids,

- (b)(iii) mixtures, liquid at ambient temperature, of at least one ionic liquid and of at least one organic solvent which is miscible with the ionic liquid(s).

**3.** Photochromic composition according to either one of the preceding claims, **characterized in that** the room-temperature ionic liquids (RTILs) are chosen from the salts of formula $Q^+A^-$ in which:

$Q^+$ represents a cation chosen from ternary and quaternary ammonium, quaternary phosphonium, ternary sulfonium and guanidinium ions, and
$A^-$ represents any organic or inorganic anion capable of forming, with $Q^+$, a salt having a melting point of less than 20°C.

**4.** Composition according to any one of the preceding claims, **characterized in that** the ionic liquids are chosen from 1-butyl-3-methylimidazolium bis(trifluoromethylsulfonyl)amide, 1-butyl-2,3-dimethylimidazolium bis(trifluoromethylsulfonyl)amide, 1-ethyl-3-methylimidazolium bis(trifluoromethylsulfonyl)amide, 1-hexyl-3-methylimidazolium bis(trifluoromethylsulfonyl)amide, 1-octyl-3-methylimidazolium bis(trifluoromethylsulfonyl)amide, 2,3-dimethyl-1-propylimidazolium bis(trifluoromethylsulfonyl)amide, 1-phenylethyl-3-methylimidazolium bis(trifluoromethylsulfonyl)amide, (phenylethyl)-dimethylbenzylammonium bis(trifluoromethylsulfonyl)amide, ethyldimethylbenzylammonium bis(trifluoromethylsulfonyl)amide.

**5.** Composition according to any one of Claims 2 to 4, **characterized in that** the organic solvent miscible with the ionic liquid(s) is chosen from ethyl 4-methoxyphenylacetate (EMPA), propylene carbonate, diphenylmethane, toluene, tetrabutylurea, γ-butyrolactone, acetophenone and solvents comprising a phthalate unit.

**6.** Composition according to any one of the preceding claims, **characterized in that** it exhibits a viscosity at 20°C of less than 1Pa.s (1000 centipoises), preferably between 0.0009 and 0.1 Pa.s (9 and 100 centipoises).

**7.** Composition according to any one of the preceding claims, **characterized in that** the concentration of the photochromic dye is between 0.01 and 0.4 mol/l, preferably between 0.05 and 0.3 mol/l.

**8.** Optical device, comprising a photochromic composition according to any one of the preceding claims.

**9.** Optical device according to Claim 8, **characterized in that** it comprises an assembly of cells placed side by side parallel to a surface of the optical device, each cell being hermetically closed and containing said photochromic composition according to any one of Claims 1-7.

**10.** Optical device according to Claim 8 or Claim 9, **characterized in that** the assembly of cells placed side by side parallel to a surface of said optical device and containing said photochromic composition is formed in a transparent polymeric layer formed on a transparent rigid substrate.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*


### Documents brevets cités dans la description

- FR 2872589
- FR 2795085 A

### Littérature non-brevet citée dans la description

- Photochromism : Molecules and Systems. Studies in Organic Chemistry 40. Elsevier, 1990